# EUROPÄISCHE PATENTSCHRIFT

(11) **EP 0 829 661 B1**
(45) Veröffentlichungstag und Bekanntmachung des Hinweises auf die Patenterteilung: **11.09.2002**
(21) Anmeldenummer: 97110709.9
(22) Anmeldetag: 01.07.1997
(51) Int. Cl.: F16J 15/08

(54) **Metallische Flachdichtung**
Metallic flat gasket
Joint plat métallique

(30) Priorität: 13.09.1996 DE 19637356
(43) Veröffentlichungstag der Anmeldung: 18.03.1998
(73) Patentinhaber: Federal-Mogul Sealing Systems GmbH, 57562 Herdorf (DE)
(72) Erfinder: Fischer, Jan-Peter, Dipl.-Ing., 65589 Hadamar (DE); Düber, Hans-Georg, 57562 Herdorf (DE); Reifenröther, Dieter, 57518 Betzdorf (DE)

(56) Entgegenhaltungen:
- PATENT ABSTRACTS OF JAPAN vol. 7, no. 41 (M-194), 18.Februar 1983 & JP 57 190737 A (RIYOUTA KAMAKARI), 24.November 1982,
- PATENT ABSTRACTS OF JAPAN vol. 7, no. 41 (M-194), 18.Februar 1983 & JP 57 190738 A (RIYOUTA KAMAKARI), 24.November 1982,

## Beschreibung

Die Erfindung betrifft eine metallische Flachdichtung, insbesondere eine Zylinderkopfdichtung für Verbrennungskraftmaschinen, bestehend aus einem Laminat aus mindestens zwei Platten mit Randausnehmungen oder Durchgangsöffnungen sowie innen vom Rand der Randausnehmungen oder Durchgangsöffnungen ausgehenden Vorsprüngen zur formschlüssigen Verbindung der Platten untereinander wobei eine erste und eine zweite Platte Vorsprünge aufweist, die derart gebogen sind, daß die Vorsprünge der ersten Platte die Vorsprünge der zweiten Platte überlappen, wobei die Vorsprünge innerhalb der Randausnehmungen oder Durchgangsöffnungen sich erstrecken ohne über den äußeren Rand der Randausnehmungen oder Durchgangsöffnungen der Flachdichtung vorzustehen wobei die Vorsprünge als federnde Zungen ausgebildet sind.

Flachdichtungen für Verbrennungskraftmaschinen können aus einem Laminat mehrerer übereinander liegender Metallblechplatten gebildet sein. Für die Handhabung der einbaufertigen Dichtung bis zur Montage ist eine sichere Verbindung der einzelnen Metallagen erforderlich. Es sind verschiedene Techniken bekannt, um die einzelnen Lagen unlösbar miteinander zu verbinden. Bevorzugt werden zusätzliche Bauteile wie Nieten oder Einfassungensringe verwendet, die gegebenenfalls in zusätzlichen Durchgangsöffhungen der Flachdichtung montiert werden. Je nach Artikelgeometrie und Anzahl der Positionen der Befestigungspunkte kann es vorkommen, daß die einzelnen Lagen nicht plan aufeinanderliegen. Abhilfe können hier am Rand herumgebogene Endbereiche schaffen.

Aus der EP 0 500 273 B1 ist eine Flachdichtung zu entnehmen, bei der mindestens zwei Metallplatten miteinander verbunden sind. Zum verbinden der Metallplatten sind in Bereichen, wo die Abdichtungsfähigkeit nicht beeinträchtigt wird, Befestigungsmittel vorgesehen.

Im Loch einer Platte ist ein Biegestreifen angeordnet, der durch herumbiegen um 180° auf den Rand des Loches einer anderen Platte aufliegt. Der Nachteil dieser Konstruktion, wie auch bei der Verwendung von Nieten liegt darin, daß die umgebogenen Biegestreifen oder Nieten auf den äußeren Platten aufliegen und die Dicke der Dichtung in diesen Bereichen somit erhöht. Um dies zu vermeiden, wurde bei dreilagigen Platten die Zwischenlage mit einer Aussparung versehen. In diesem Fall wird zwar die Dichtpressung auf der Dichtung in diesem Bereich nicht erhöht, allerdings müssen hierzu die Deckplatten aber zusätzlich verformt werden, was zu unerwünschten Spannungen in der Platte mit Rißanfälligkeit und damit zur Beeinträchtigung des Abdichtverhaltens führt.

Die JP 57190737 A offenbart eine gattungsgemäße Flachdichtung bestehend aus zwei Platten. Am Rand der Platten überlappen sich zwei Zungen um die einzelnen Lagen miteinander zu verbinden. Damit die Zungen nicht aus der Oberfläche der Flachdichtung hervorstehen, müssen die Zungen in einem separaten Arbeitsgang plan gepreßt werden.

Der Erfindung liegt die Aufgabe zugrunde, eine gattungsgemäße Flachdichtung dahingehend zu verbessern, daß mindestens drei aufeinanderliegende Metallplatten mit einfachen und wirtschaftlichen Maßnahmen aneinander befestigt sind, ohne daß die axiale Dicke der Flachdichtung in den Befestigungsbereichen vergrößert wird.

Diese Aufgabe wird erfindungsgemäß durch die kennzeichnenden Merkmale des Patentanspruchs 1 gelöst. Vorteilhafte Ausgestaltungen der Erfindung sind in den Unteransprüchen dokumentiert. Durch die Erfindung ist es jetzt möglich, mit einer wirtschaftlichen Maßnahme alle im Laminat aufeinanderliegenden Platten derart zu verbinden, daß sämtliche Lagen gehalten werden ohne daß die axiale Dicke der Flachdichtung vergrößert wird.

Im Sinne der Erfindung können sowohl die funktionsmäßig ohnehin vorhandenen Durchgangsöffnungen der Flachdichtung, als auch zusätzlich angeordnete Öffnungen mit den Befestigungsmitteln in Form von Vorsprüngen oder Zungen ausgerüstet sein. Die erfindungsgemäßen Flachdichtungen sollen bevorzugt als Zylinderkopfdichtungen für Verbrennungskraftmaschinen eingesetzt werden, sie können jedoch auch als Auspufflanschdichtungen oder für andere Anwendungsfälle verwendet werden. Anstelle aus Metall können die Zwischenplatten, falls erforderlich, auch aus einem anderen Werkstoff, wie beispielsweise einem Faservliesmaterial bestehen.

Die Erfindung ist in der Zeichnung dargestellt und wird im folgenden näher beschrieben. Es zeigen:
- Figur 1: Eine Flachdichtung in der Draufsicht
- Figur 2: Querschnitt einer bekannten zweilagigen Flachdichtung im Bereich eine Schnittlinie II-II der Draufsicht 1
- Figur 3: Querschnitt einer aus fünf Lagen gebildeten Flachdichtung gemäß der Erfindung im Bereich III der Draufsicht 1

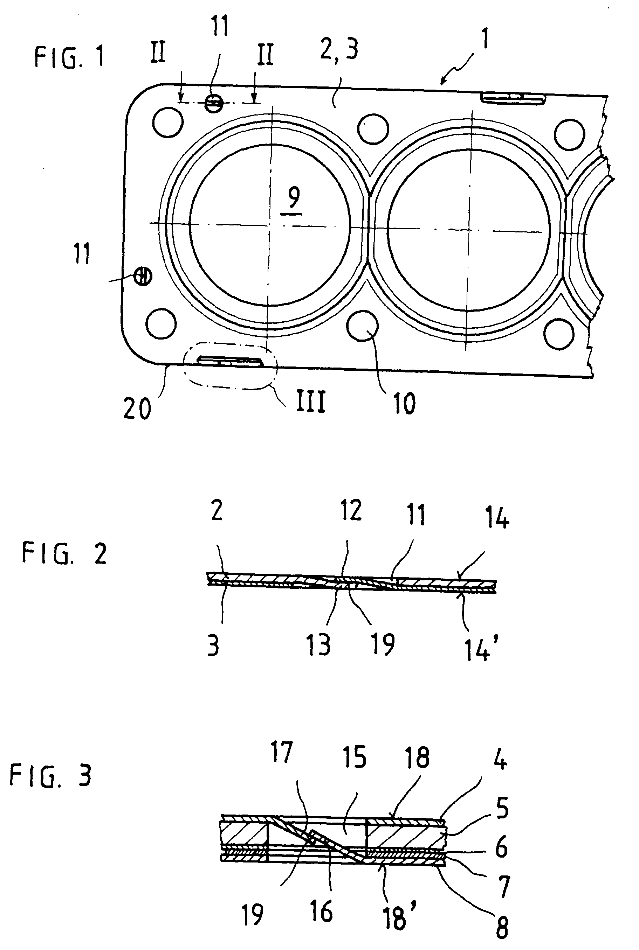

Die Figur 1 zeigt eine metallische Flachdichtung (1) für den Zylinderkopf einer Verbrennungskraftmaschine. Die Flachdichtung (1) besteht aus einem Laminat von zwei oder mehreren Platten (2, 3, 4, 5, 6, 7, 8). Neben den Brennraumöffnungen (9) weist die Dichtung eine Vielzahl von Löchern (10) auf, die als Schraubendurchgangsbohrungen oder Fluidöffnungen für Wasser- oder Ölkanäle ausgebildet sein können.

Die jeweils außenliegenden Platten (2, 3, 4, 8) werden als Funktionslagen oder Deckplatten bezeichnet. Zwischen den Deckplatten (2, 3, 4, 8) können je nach Anwendungsfall nur eine oder auch mehrere Zwischenlagen oder Zwischenplatten (5, 6, 7) angeordnet sein. Damit die Platten eben aufeinanderliegen und die einzelnen

Öffnungen in jeder Platte zueinander ausgerichtet sind, werden die Platten miteinander verbunden.

In der Figur 2 ist eine bekannte Verbindung dargestellt. In einer Durchgangsöffnung (11) erstrecken sich durch Ausstanzen oder andere Trennverfahren gebildete Vorsprünge (12, 13). Diese als federnde Zungen ausgebildeten Vorsprünge (12, 13) ragen in die Durchgangsöffnung (11) diametrial gegenüberliegend hinein. Mittels einer nicht dargestellten Vorrichtung werden die Zungen (12, 13) derart übereinander gelegt, daß sie mit ihrem Endbereich aufeinanderliegen. Die Platten (2, 3) können eine unterschiedlich axiale Dicke aufweisen oder aber gleich dick ausgebildet sein. Da der übereinandergelegte Bereich der Platten (2, 3) innerhalb der Durchgangsöffnung (11) angeordnet ist, stehen die Zungen (12, 13) nicht über den äußeren Rand der Durchgangsöffnung (11) oder der Oberfläche (14, 14') der Deckplatten hervor.

In der Figur 3 ist eine erfindungsgemäße Verbindung in einer Randausnehmung (15) einer aus fünf Lagen bestehenden Flachdichtung dargestellt. Nur die Deckplatten (4, 8) sind mit erfindungsgemäßen Zungen (16, 17) ausgebildet. Die Zungen (16, 17) erstrecken sich unter einen Winkel innerhalb der Randausnehmung (15) und liegen aufgrund der Federrückstellkraft, die aus der Abbiegung resultiert, aufeinander, ohne über die Oberfläche (18, 18') der Flachdichtung hervorzustehen. Im überlappten Bereich (19) können die Zungen (16, 17) durch Kleben oder Schweißen zusätzlich miteinander verbunden sein.

## Patentansprüche

1. Metallische Flachdichtung, insbesondere Zylinderkopfdichtung für Verbrennungskraftmaschinen, die ein Laminat aus mindestens zwei Platten (4,8) mit Randausnehmungen (15) oder Durchgangsöffnungen (11) sowie innen vom Rand der Randausnehmungen (15) oder Durchgangsöffnungen (11) ausgehenden Vorsprüngen (17) zur formschlüssigen Verbindung der Platten (4,8) untereinander aufweist wobei eine erste und eine zweite Platte (4, 8) Vorsprünge (16, 17) aufweist, die derart gebogen sind, daß die Vorsprünge (17) der ersten Platte (4) die Vorsprünge (16) der zweiten Platte (8) überlappen, wobei die Vorsprünge (16,17) innerhalb der Randausnehmungen (15) oder Durchgangsöffnungen (11) sich erstrecken ohne über den äußeren Rand der Randausnehmungen (15) oder Durchgangsöffnungen (11) der Flachdichtung (1) vorzustehen wobei die Vorsprünge (16,17) als federnde Zungen ausgebildet sind, und das Laminat aus zwei äußeren Deckplatten (4, 8) aus Metall und mindestens einer Zwischenplatte (5, 6, 7) gebildet ist und die federnden Zungen (16,17) an den Deckplatten (4, 8) angeordnet sind und dass die Zungen (17) der ersten Deckplatte (4) unter einem Winkel axial in Richtung der zweiten Deckplatte (8) und die Zungen (16) der zweiten Deckplatte (8) unter einen Winkel in Richtung der ersten Deckplatte (4) gebogen sind, **dadurch gekennzeichnet, dass** die Zungen (17) der ersten Deckplatte (4) sich unter die Zungen (16) der zweiten Deckplatte (8) erstrecken und durch die aus der Biegung resultierenden Federrückstellkräfte mit einem Bereich (19) ihrer nach außen weisenden Oberfläche aufeinanderliegen.

2. Metallische Flachdichtung nach Anspruch 1, **dadurch gekennzeichnet, daß** die radiale Erstreckung der Zungen (16, 17) größer als die halbe Breite der Randausnehmung (15) oder Durchgangsöffnung (11) ist.

3. Metallische Flachdichtung nach den Ansprüchen 1 und 2, **dadurch gekennzeichnet, daß** die sich überlappenden Zungen (16, 17) diametral gegenüberliegend angeordnet sind.

4. Metallische Flachdichtung nach mindestens einem der Ansprüche 1 bis 3, **dadurch gekennzeichnet, daß** die Dicke der Deckplatten (4, 8) etwa gleich ist.

5. Metallische Flachdichtung nach mindestens einem der Ansprüche 1 bis 4, **dadurch gekennzeichnet, daß** die Zungen (16, 17) stoffschlüssig miteinander verbunden sind.

6. Metallische Flachdichtung nach mindestens einem der Ansprüche 1 bis5, **dadurch gekennzeichnet, daß** die Zungen (16, 17) durch Schweißen miteinander verbunden sind.

7. Metallische Flachdichtung nach mindestens einem der Ansprüche 1 bis 6, **dadurch gekennzeichnet, daß** die radiale Erstreckung der Zungen (16, 17) jeder Platte (4, 8) gleich ist.

8. Metallische Flachdichtung nach den Ansprüchen 1 bis 7, **dadurch gekennzeichnet, daß** die Zungen (16, 17) am Außenrand (20) der Flachdichtung (1) angeordnet sind und parallel zum Außenrand (20) verlaufen.

9. Metallische Flachdichtung nach mindestens einem der Ansprüche 1 bis 8, **dadurch gekennzeichnet, daß** die Zungen (16, 17) in Durchgangsöffnungen angeordnet sind, die als Fluidöffnungen fungieren.

## Claims

1. Metal flat gasket, especially a cylinder head gasket for an internal combustion engine, which has a laminate formed from at least two plates (4,8) with edge recesses (15) or through-openings (11) and projections (17) extending inwards from the edge of the edge recesses (15) or through-openings (11) to connect the plates (4,8) to one another as a form-fit, a first plate and a second plate (4,8) having projections (16,17) which are bent in such a way that the projections (17) of the first plate (4) overlap the projections (16) of the second plate (8), the projections (16,17) extending inside the edge recesses (15) or through-openings (11) without protruding beyond the outer edge of the edge recesses (15) or through-openings (11) of the flat gasket (1), said projections (16,17) being configured as resilient tabs, and the laminate being formed from two metal outer cover plates (4,8) and at least one intermediate plate (5,6,7) and the resilient tabs (16,17) being arranged on the cover plates (4,8), the tabs (17) of the first cover plate (4) being bent at an angle axially towards the second cover plate (8) and the tabs (16) of the second cover plate (8) being bent at an angle towards the first cover plate (4), **characterised in that** the tabs (17) of the first cover plate (4) extend below the tabs (16) of the second cover plate (8) and, due to the resilient restoring forces resulting from the bending, lie on top of one another with a region (19) of their upwardly pointing surface.

2. Metal flat gasket according to claim 1, **characterised in that** the radial extension of the tabs (16,17) is larger than half the width of the edge recess (15) or through-opening (11).

3. Metal flat gasket according to claims 1 and 2, **characterised in that** the overlapping tabs (16,17) are arranged lying diametrically opposite.

4. Metal flat gasket according to at least one of claims 1 to 3, **characterised in that** the thickness of the cover plates (4,8) is roughly the same.

5. Metal flat gasket according to at least one of claims 1 to 4, **characterised in that** the tabs (16,17) are connected to one another through the material.

6. Metal flat gasket according to at least one of claims 1 to 5, **characterised in that** the tabs (16,17) are connected to one another by welding.

7. Metal flat gasket according to at least one of claims 1 to 6, **characterised in that** the radial extension of the tabs (16,17) of each plate (4,8) is identical.

8. Metal flat gasket according to claims 1 to 7, **characterised in that** the tabs (16,17) are arranged on the outer edge (20) of the gasket (1) and extend parallel to the outer edge (20).

9. Metal flat gasket according to at least one of claims 1 to 8, **characterised in that** the tabs (16,17) are arranged in through-openings which act as fluid openings.

## Revendications

1. Joint plat métallique, en particulier joint de culasse pour moteur à combustion interne, comprenant un laminé constitué au moins de deux plaques (4, 8) ayant des évidements de bord (15) ou des ouvertures de passage (11) ainsi que des protubérances (17) s'étendant à l'intérieur à partir du bord des évidements de bord (15) ou des ouvertures de passage (11) pour une liaison adaptée en forme des plaques (4, 8) entre elles, une première et une seconde plaques (4, 8) comprenant des protubérances (16, 17) qui sont recourbées de telle manière que les protubérances (17) de la première plaque (4) recouvrent les protubérances (16) de la deuxième plaque (8), les protubérances (16, 17) s'étendant à l'intérieur des évidements de bord (15) ou des ouvertures de passage (11) sans faire saillie sur le bord externe des évidements de bord (15) ou des ouvertures de passage (11) du joint plat (1), les protubérances (16, 17) étant réalisées sous la forme de languettes élastiques et le laminé étant formé à partir de deux plaques de couverture extérieure (4, 8) en métal et d'au moins une plaque intermédiaire (5, 6, 7) et les languettes élastiques (16, 17) étant situées au niveau des plaques de couverture (4, 8) et les languettes (17) de la première plaque de couverture (4) étant coudée avec un angle axial en direction de la deuxième plaque de couverture (8) et les languettes (16) de la deuxième plaqué de couverture (8) étant coudées avec un angle en direction de la première plaque de couverture (4), **caractérisé en ce que** les languettes (17) de la première plaque de couverture (4) s'étendent sous les languettes (16) de la seconde plaque de couverture (8) et reposent l'une sur l'autre avec une zone (19) de leur surface supérieure orientée vers l'extérieur du fait des forces de réaction élastique résultant du coudage.

2. Joint plat métallique selon la revendication 1, **caractérisé en ce que** l'étendue radiale des languettes (16, 17) est supérieure à la moitié de la largeur de l'évidement de bord (15) ou de l'ouverture de passage (11).

3. Joint plat métallique selon les revendications 1 et 2, **caractérisé en ce que** les languettes qui se recouvrent (16, 17) sont disposées de manière diamétralement opposée.

4. Joint plat métallique selon au moins une des revendications 1 à 3, **caractérisé en ce que** l'épaisseur des plaques de couverture (4, 8) est environ identique.

5. Joint plat métallique selon au moins une des revendications 1 à 4, **caractérisé en ce que** les languettes (16, 17) sont reliées l'une à l'autre par de la matière.

6. Joint plat métallique selon au moins une des revendications 1 à 5, **caractérisé en ce que** les languettes (16, 17) sont reliées l'une à l'autre par soudage.

7. Joint plat métallique selon au moins une des revendications 1 à 6, **caractérisé en ce que** l'étendue radiale des languettes (16, 17) de chaque plaque (4, 8) est identique.

8. Joint plat métallique selon les revendications 1 à 7, **caractérisé en ce que** les languettes (16, 17) sont disposées au niveau du bord externe (20) du joint plat (1) et s'étendent parallèlement au bord externe (20).

9. Joint plat métallique selon au moins une des revendications 1 à 8, **caractérisé en ce que** les languettes (16, 17) sont disposées dans des ouvertures de passage qui servent d'ouverture de fluide.
